# EUROPEAN PATENT SPECIFICATION

(11) **EP 1 946 606 B1**
(45) Date of publication and mention of the grant of the patent: **03.11.2010**
(21) Application number: 06799561.3
(22) Date of filing: 29.09.2006
(51) Int. Cl.: H04R 3/00, H04R 1/40, H04N 7/14

(54) **DIRECTIONAL AUDIO CAPTURING**
GERICHTETE AUDIO-ERFASSUNG
CAPTURE AUDIO DIRECTIONNELLE

(30) Priority: 30.09.2005 NO 20054527; 30.09.2005 US 721999 P
(43) Date of publication of application: 23.07.2008
(73) Proprietor: Squarehead Technology AS, 0410 Oslo (NO)
(72) Inventor: KJØLERBAKKEN, Morgan, 0481 Oslo (NO); JAHR, Vibeke, 1540 Vestby (NO); HAFIZOVIC, Ines, 0481 Oslo (NO)
(74) Representative: Onsagers Ltd
(86) International application number: PCT/NO2006/000334
(87) International publication number: WO 2007/037700

(56) References cited:
- US-A1- 2003 072 461
- US-B1- 6 788 337
- CE WANG ET AL: "Robust automatic video-conferencing with multiple cameras and microphones" 30 July 2000 (2000-07-30), MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, PAGE(S) 1585-1588 , XP010512810 ISBN: 0-7803-6536-4 page 1585
- CHOU T: "Frequency-independent beamformer with low response error" 9 May 1995 (1995-05-09), ACOUSTICS, SPEECH, AND SIGNAL PROCESSING, 1995. ICASSP-95., 1995 INTERNATIONAL CONFERENCE ON DETROIT, MI, USA 9-12 MAY 1995, NEW YORK, NY, USA,IEEE, US, PAGE(S) 2995-2998 , XP010151974 ISBN: 0-7803-2431-5 page 2995 - page 2996

## Description

### Introduction

The present invention relates to directional audio capturing and more specifically to a method and system for producing selective audio in a video production, thereby enabling broadcasting with controlled steer and zoom functionality.

The system is useful for capturing sound under noisy conditions where spatial filtering is necessary, e.g. capturing of sound from athletes, referees and coaches under sports events for broadcasting production.

The system comprises one or more microphone arrays, one or more sampling units, storing means, and a control and signal-processing unit with input means for receiving position data.

### Background of the invention - prior art

A microphone array is a multi channel acoustic acquisition setup comprising two or more sound pressure sensors located at different locations in space in order to spatially sample the sound pressure from one or several sources. Signal processing techniques can be used to control, or more specifically to steer, the microphone array toward any source of interest. The techniques to use can be among: delay of signals, filtering, weighting, and adding up signals from the microphone elements to achieve the desired spatial selectivity. This is referred to as the beam forming. Microphones in a controllable microphone array should be well matched in amplitude and phase. If not the differences must be known in order to perform error corrections in software and/or hardware. The principles behind steering of an array are well known from relevant signal processing literature. Microphone arrays can be rectangular, circular, or in three dimensions.

There are several known systems comprising microphone arrays. The majority of these have a main focus on signal processing for optimization of sampled signals and/or interpreting the position of objects or elements in the picture.

The most relevant prior art are described in the following.

US2003/0072461 describes a multiple colinear microphone array followed by signal processing, with highly directional response.

US-5940118 describes a system and method for steering directional microphones. The system is intended used in conference rooms containing audience members. It comprises optical input means, i.e. cameras and interpreting means for interpreting which audio members that are speaking, and means for activating the sound towards the sound source.

US-6469732 describes an apparatus and method used in a video conference system for providing accurate determination of the position of a speaking participant.

JP2004 180197 describes a microphone array that can be digitally controlled with regard to acoustic focus.

The present invention is a method and system for controlled focusing and steering of the sound to be presented together with video. The invention differs from prior art in its flexibility and ease of use.

In a preferred embodiment, the invention is a method and system for receiving position and focus data from one or more cameras shooting an event, and use this input data for generating relevant sound output together with the video.

In another embodiment, a user may input the wanted location to pick up sound from, and signal processing means will use this to perform the necessary signal processing.

In yet another embodiment, the position data for the location to pick up sound from can be sent from a system comprising antenna(s) picking up radio signals from radio transmitter(s) placed on or in object(s) to track, together with means for deducing the location and send this information to the system according to the present invention. The radio sender can for instance be placed in a football, thereby enabling the system to record sound from the location of the ball, and also to control one or more cameras such that both video and sound will be focused on the location of the ball.

### Objects and summary of the invention

The object of the present invention is to provide selective audio output with regard to relevant target area(s).

The object is achieved by a system for digitally directive focusing and steering of sampled sound within the target area for producing the selective audio output. The system comprises one or more broadband arrays of microphones, one or more A/D signal converting unit, a control unit with input means, output means, storage means, and one or more signal processing units.

The system is **characterized in that** the control unit comprises input means for receiving digital signals of captured sound from all the microphones comprised by the system, and input means for receiving instructions comprising selective position data.

The system is further **characterized in that** the control unit comprises signal processing means for: choosing signals from a selection of relevant microphones in the array(s) for further processing, and for performing signal processing on the signals from the selection of relevant microphones for focusing and steering the sound according to the received instructions, and for generating a selective audio output in accordance with the performed processing.

The object of the invention is further achieved by a method for digitally directive focusing and steering of sampled sound within a target area for producing a selective audio output, where the method comprises use of one or more broadband arrays of microphones, an A/D signal converting unit, and a control unit with input means, output means, storage means and one or more signal processing units.

The method is **characterized in that** it comprises the following steps performed by the control unit:
- receiving digital signals of captured sound from all the microphones comprised in the system;
- receiving instructions comprising selective position data through the input means in the control unit;
- choosing signals from a selection of relevant microphones in the broadband array(s) for further processing, and where the selection performed is based on spectral analyses of the signal;
- performing signal processing on the signals from the selection of relevant microphones for focusing and steering the sound according to the received instructions;
- generating one or more selective audio output(s) in accordance with the performed processing.

One main feature of the invention is that the selective position data can be provided in real time or in a post processing process of the recorded sound. The focus area(s) to produce sound from can be defined by an end user giving input instructions of the area(s) or by the position and focusing of one or more cameras.

The objects of the invention is obtained by the means and the method as set for the in the appended set of claims.

### Brief description of the drawings

The invention will be described in further detail with reference to the figures wherein;
Fig. 1 shows an overview of the different system components integrated with cameras.
Fig. 2 shows a setup that can provide audio from different locations to a surround system, depending on the cameras that are in use.
Fig. 3 shows examples of frequency optimizing with spatial filters in the array deign.

### Detailed description of the preferred embodiments

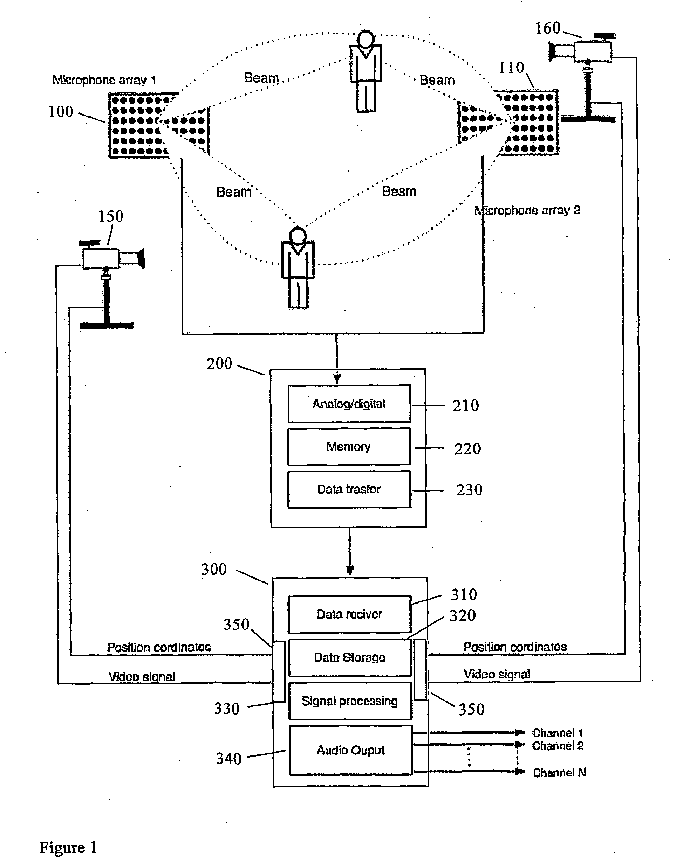

Figure 1 shows an overview of the different system components integrated with cameras.

The components shown in the drawing are broadband microphone arrays 100, 110 to be positioned adjacent to the area to record sound from. The analogue signals from each microphone are converted to digital signal in an A/D converter 210 comprised in an A/D unit 200. The A/D unit can also have memory means 220 for storing the digital signals, and data transfer means 230 for transferring the digital signals to a control unit 300.

The control unit 300 can be located at a remote location and receive the digital signals of the captured sound over a wired or wireless network, e.g. through cable or satellite letting an end user do all the steer and focus signal processing local. The control unit 300 comprises a data receiver 310 for receiving digital sound signals from the A/D unit 200. It further comprises data storage means 320 for storing the received signals, signal processing means 330 for real time or post processing, and audio generating means 340 for generating a selective audio output. Before storing the signals in the data storage, the signal can be converted to a compressed format to save space.

The control unit 300 further comprises input means 350 for receiving instructions comprising selective position data. These instructions are typically coordinates defining position and focusing point of one or more camera(s) shooting an event taking place at specific location(s) within the target area.

In a first embodiment, the coordinates of the sound source can be provided by the focus point of camera(s) 150, 160 and from the azimuth and altitude of camera tripod(s). By connecting the system to one or more television cameras and receive positioning coordinates in two or three dimensions (azimuth, altitude, and range), it is possible to steer and focus the sound according to the focus point of the camera lens.

In a second embodiment, the coordinates and thus the location of the sound source can be provided by an operator operating a graphical user interface(s) (GUI), showing an overview of the target area, a keyboard, an audio mixing unit, and one or more joysticks. The GUI provides the operator with the information on where to steer and zoom.

The GUI can show live video from one or more connected cameras (multiple channels). In a preferred embodiment, additional graphic is added to the GUI in order to point out where the system is steering. This simplifies the operation of the system and gives the operator full control over zoom and steer function.

In a third embodiment, the system can use algorithms to find predefined sound sources. For example the system can be set up to listen for a referee's whistle and then steer and focus audio and video to this location.

In yet another embodiment, the location or coordinates can be provided by a system tracking the location of an object, e.g. a football being played in a play field.

A combination of the above mentioned embodiments is also a feasible alternative.

On order for the sound and focus area of the camera(s) to be synchronized, the system need to have a common coordinate system. The coordinates from the cameras will be calibrated relative to a reference point common for the system and cameras.

The system can capture sound form several different locations simultaneously (multi-channel-functionality) and provide audio to a surround system. The locations can be predefined for each camera or change dynamically in real-time in accordance with the cameras position, focus, and angle.

The selective audio output is achieved by combining the digital sound signals and the position data and performing the necessary signal processing in the signal processor.

Sampling of the signals from the microphones can be done simultaneously for all the microphones or multiplexed by multiplexing signals from the microphones before the analog to digital conversion.

The signal processing comprises spatial and spectral beam forming and calculation of signal delay due to multiplexed sampling, for performing corrections in software or hardware.

The signal processing further comprises calculation of sound pressure delay from the sound target to the array of microphones with the purpose of performing synchronization of the signal with a predefined time delay.

The signal processing comprises regulation of the sampling rate on selected microphone elements to obtain optimal signal sampling and processing.

The signal processing enables dynamically selective audio output with panning, tilting and zooming of the sound to one or more locations simultaneously and also to provide audio to one or several channels including surround systems.

The signal processing also provides variable sampling frequency (Fs). Fs on microphone elements active at high frequencies is higher than on elements active at low frequencies. Fs based on the specter of the signal and Rayleigh criteria (sampling rate at least twice as high as signal frequency) gives optimal signal sampling and processing, and provides smaller amount of data to be stored and processed.

The signal processing comprises changing aperture of the microphone array in order to obtain a given frequency response and reduce the number of active elements in the microphone array.

The focusing point(s) decides which spatial weighting functions to use for adjusting the degree of spatial beam forming with focusing and steering with delay and summing of beam formers, and changing of side lobes' level and the beam width.

Spatial beam forming is executed by choosing a weighting function among Cosin, Kaiser, Hamming, Hannig, Blackmann-Harris and Prolate Spheroidal according to chosen beam width of the main lobe.

The system samples the acoustic sound pressure from all the elements, or a selection of elements in all the arrays and stores the data in storage unit. The sampling can be done simultaneously for all the channels or multiplexed. Since the whole sound field is sampled and stored, all the steer-and-zoom signal processing for the sound can, in addition to real-time processing, be done as post-processing (go back in time and extract sound from any location). Post-processing of the stored data offers the same functionality as real-time processing and the operator can provide audio from any wanted location the system is set to cover.

Since it is of great importance to provide synchronization with external audio and video equipment, the system is able to estimate and compensate for the delay of the audio signal due to the propagation time of the signal from the sound source to the microphone array(s). The operator will set the maximum required range that system needs to cover, and the maximum time delay will be automatically calculated. This will be the output delay of the system and all the audio out of the system will have this delay.

By implementing different sensors, the system can correct for error in sound propagation due to temperature gradients, humidity in the media (air), and movements in the media caused by wind and exchange of warm and cold air.

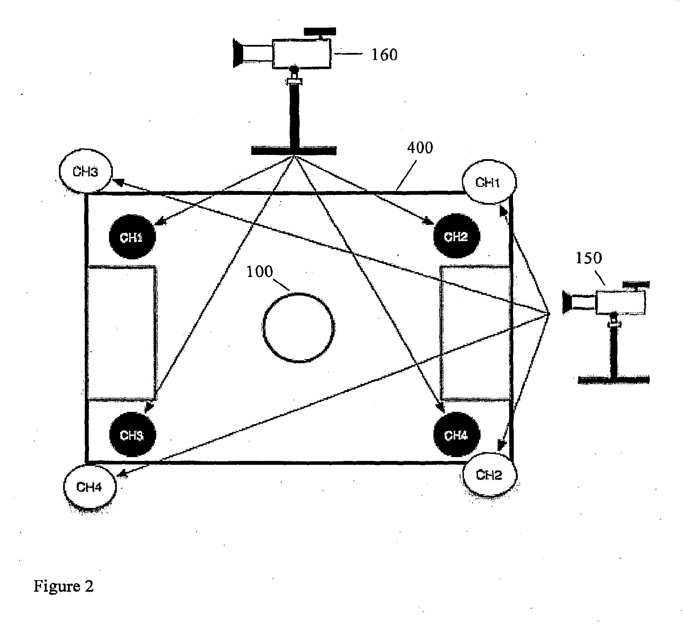

Figure 2 shows a setup that can provide audio from different locations to a surround system, depending on the cameras that are in use. The figure shows a play field 400 with an array of microphones 100 located in the middle and above the play field 400. The figure further shows one camera 150 covering the shortest side of the play field 400, and another camera 160 covering the longest side of the play field 400.

By using this setup, the present invention can provide relevant sound from multiple channels (CH1 - CH4) to the scene covered by each camera.

By receiving location information from a system comprising a radio transmitter, placed in a ball being played in the play filed, and antenna(s) for picking up the radio signals, it is possible to have a system always picking up the sound from where the action is, and for instance let this sound represent the center channel in a surround system.

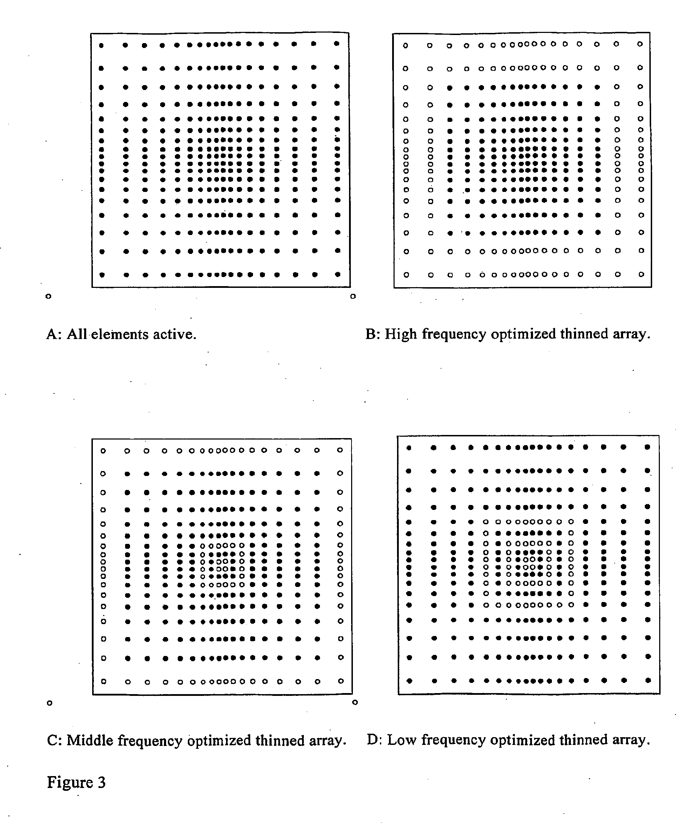

Figure 3 shows examples of changing aperture for frequency optimizing with spatial filters in the array design.

The systems can dynamically change the aperture of the array to obtain an optimized beam according to wanted beam width, frequency response and array gain. This can be accomplished by only processing data from selected array elements and in this way the system can reduce needed amount of signal processing.

Black dots denotes active microphone elements, and white dots denotes passive microphone elements.

A shows a microphone array with all microphone elements active. This configuration will give the best response and directivity for all the spectra the array will cover.

B shows a high frequency optimized thinned array that can be used when there is no low frequency sound present or when no spatial filtering for the lower frequency is required.

C shows a middle frequency optimized thinned array that can be used when there is no low or high frequency sound present or when no spatial filtering for the lower or higher frequency is wanted, e.g. when only normal speech are present.

D shows a low frequency optimized thinned array that can be used when there is no high frequency sound present or when no spatial filtering for the higher frequency is required.

Several adaptations of the system are feasible, thereby enabling different ways of using the system. The signal processing, and thus the final sound output can be processed locally, or at a remote location.

By enabling signal processing at a remote location it is possible for an end user, watching for instance sports event on a TV, to control what locations to receive sound from. Signal processing means can be located at the end user, and the user can input the locations he or she wants to receive sound from. The input device for inputting locations can for instance be a mouse or joystick controlling a cursor on the screen where the sports event is displayed. The signal processing means 300 with its output and input means 340, 350 can then be implemented in a top-set box.

Alternatively, the end user may send position data to signal processing means located at another location than the end user, and in turn receive the processed and steered sound from relevant position(s).

## Claims

1. A system for digitally directive focusing and steering of sampled sound within a target area (400) for producing a selective audio output, comprising one or more broadband arrays of microphones (100, 110), an A/D signal converting unit (200), a control unit (300), wherein the control unit (300) comprises:
- receiver means (310) for receiving digital signals of captured sound from all the microphones comprised by the system;
- input means (350) for receiving instructions comprising selective position data in the form of coordinates, where the coordinates are in two or three dimensions for defining focusing point(s);
- signal processing means (330) for choosing signals from a selection of relevant microphones in the array(s) (100, 110) for further processing, where the selection performed is based on spectral analyses of the received signal;
- signal processing means (330) for performing signal processing on the signals from the selection of relevant microphones for focusing and steering the sound according to the received instructions;
- signal processing means (330) for generating one or more selective audio output(s) in accordance with received instructions and performed signal processing.

2. A system according to claim 1, **characterized in that** the control unit (300) is located at a remote location and comprises means (310) for receiving the digital signals of the captured sound over a wired or wireless network.

3. A system according to claim 1, **characterized in that** the input means (350) in the control unit (300) comprises means for receiving selective position data over a wired or wireless network.

4. A system according to claim 1, **characterized in that** the control unit (300) further comprises data storage means (320) for storing the received digital signals of the captured sound.

5. A system according to claim 1, **characterized in that** the control unit (300) performs signal processing on several channels based on one or several different input coordinates.

6. A system according to claim 1, **characterized in that** the control unit (300) comprises means for changing aperture of the microphone array(s) (100, 110) based on the spectral components of the incoming sound.

7. A system according to claim 4, **characterized in that** the control unit (300) further comprises means for converting received signals to a compressed format before they are stored in the storage means 320.

8. A system according to claim 1, **characterized in that** the control unit (300) further comprises means for controlling and focusing one or more cameras based on received instructions comprising selective position data.

9. A method for digitally directive focusing and steering of sampled sound within a target area (400) for producing a selective audio output, where the method comprises use of one or more broadband arrays of microphones (100, 110), an A/D signal converting unit (200), and a control unit (300), wherein method comprises the following steps performed by the control unit (300):
- receiving digital signals of captured sound from all the microphones comprised in the system;
- receiving instructions comprising selective position data in the form of coordinates, through input means (350) in the control unit (300), where the coordinates are in two or three dimensions for defining focusing point(s);
- choosing signals from a selection of relevant microphones in the array(s) (100, 110) for further processing, where the selection performed is based on spectral analyses of the received signal;
- performing signal processing on the signals from the selection of relevant microphones for focusing and steering the sound according to the received instructions;
- generating one or more selective audio output(s) in accordance with the received instructions and performed processing.

10. A method according to claim 9, **characterized in that** the received digital signals are in a compressed format.

11. A method according to claim 9, **characterized in that** the received digital signals of the captured sound from all the microphones in the array(s) (100, 110) are stored in a data storage (320).

12. A method according to claim 9, **characterized in that** the signal processing unit (300) executes the signal processing in real time.

13. A method according to claim 9 and 11, **characterized in that** the signal processing unit (300) executes the signal processing in a post processing process by using the stored signals of the captured sound.

14. A method according to claim 9, **characterized in that** the signal processing comprises spatial and spectral beam forming.

15. A method according to claim 9, **characterized in that** the signal processing comprises multiplexed sampling and calculation of signal delay, due to multiplexing, for performing corrections in software or hardware.

16. A method according to claim 9, **characterized in that** the signal processing comprises calculation of sound pressure delay from the sound target to the array of microphones with the purpose of performing synchronization of the signal with a predefined time delay.

17. A method according to claim 9, **characterized in that** the signal processing enables dynamically selective audio output with zooming and panning of the sound to one or more locations simultaneously and also to provide audio to one or several channels including surround systems.

18. A method according to claim 9, **characterized in that** the signal processing comprises regulation of the sampling rate on selected microphone elements to obtain optimal signal sampling and processing.

19. A method according to claim 9, **characterized in that** changing aperture of the microphone array is performed in order to obtain a given frequency response and reduce the number of active elements in the microphone array.

20. A method according to claim 19, **characterized in that** the received selective position data come from a system tracking on or more objects.

21. A method according to claim 14 and 19, **characterized in that** the position data decides which spatial weighting functions to use for adjusting the degree of spatial beam forming with focusing and steering with delay and summing of beam formers, and changing of sidelobes' level and the beam width.

22. A method according to claim 21, **characterized in that** the spatial beam forming is executed by choosing a weighting function among Cosin, Kaiser, Hamming, Hannig, Blackmann-Harris and Prolate Spheroidal according to chosen beamwidth of the main lobe.

23. A method according to claim 19, **characterized in that** the coordinates are defined by the position and focusing point(s) of one or more camera(s) shooting an event taking place at specific location(s) within the target area.

24. A method according to claim 19, **characterized in that** the coordinates are defined by a user controlling a user interface comprising one or more displays showing an overview of the target area, a keyboard, an audio mixing unit, and one or more joysticks.

25. A method according to claim 19, **characterized in that** the coordinates are used for controlling and focusing of one or more cameras.

26. A method according to claim 17, **characterized in that** the dynamically selective audio output in a surround system is in coherence with one or more camera(s).

## Patentansprüche

1. System zum digital gerichteten Fokussieren und Lenken von abgetastetem Schall innerhalb eines Zielbereichs (400), um eine selektive Audioausgabe zu erzeugen, eine oder mehrere geordnete Breitbandanordnung/en von Mikrofonen (100, 110), eine A/D-Signalumsetzungseinheit (200), eine Steuereinheit (300) umfassend, wobei die Steuereinheit (300) umfasst:
- eine Empfängereinrichtung (310), um digitale Signale von eingefangenem Schall von all den Mikrofonen zu empfangen, die das System umfasst;
- eine Eingabeeinrichtung (350), um Befehle zu empfangen, die selektive Positionsdaten in Form von Koordinaten umfassen, wobei die Koordinaten in zwei oder drei Dimensionen vorliegen, um einen oder mehrere Fokussierungspunkt/e zu definieren;
- eine Signalverarbeitungseinrichtung (330), um Signale aus einer Auswahl von relevanten Mikrofonen in der/den Anordnung/en (100, 110) zur Weiterverarbeitung auszuwählen, wobei die Auswahl auf Grundlage von Spektralanalysen des empfangenen Signals erfolgt;
- eine Signalverarbeitungseinrichtung (330), um eine Signalverarbeitung an den Signalen aus der Auswahl von relevanten Mikrofonen durchzuführen, um den Klang den empfangenen Befehlen entsprechend zu fokussieren und zu lenken;
- eine Signalverarbeitungseinrichtung (330), um eine selektive Audioausgabe oder mehrere selektive Audioausgaben in Übereinstimmung mit empfangenen Befehlen und erfolgter Signalverarbeitung zu generieren.

2. System nach Anspruch 1, **dadurch gekennzeichnet, dass** sich die Steuereinheit (300) an einer abgesetzten Stelle befindet und eine Einrichtung (310) umfasst, um die digitalen Signale des eingefangenen Schalls über ein drahtgebundenes oder drahtloses Netz zu empfangen.

3. System nach Anspruch 1, **dadurch gekennzeichnet, dass** die Eingabeeinrichtung (350) in der Steuereinheit (300) Einrichtungen umfasst, um selektive Positionsdaten über ein drahtgebundenes oder drahtloses Netz zu empfangen.

4. System nach Anspruch 1, **dadurch gekennzeichnet, dass** die Steuereinheit (300) darüber hinaus eine Datenspeichereinrichtung (320) umfasst, um die empfangenen digitalen Signale des eingefangenen Schalls zu speichern.

5. System nach Anspruch 1, **dadurch gekennzeichnet, dass** die Steuereinheit (300) eine Signalverarbeitung an mehreren Kanälen auf Grundlage von einer oder mehreren verschiedenen Eingabekoordinate/n vornimmt.

6. System nach Anspruch 1, **dadurch gekennzeichnet, dass** die Steuereinheit (300) Einrichtungen umfasst, um die Apertur der Mikrofonanordnung/en (100, 110) auf Grundlage der Spektralkomponenten des ankommenden Schalls zu verändern.

7. System nach Anspruch 4, **dadurch gekennzeichnet, dass** die Steuereinheit (300) darüber hinaus Einrichtungen umfasst, um die empfangenen Signale in ein komprimiertes Format umzusetzen, bevor sie in der Speichereinrichtung (320) gespeichert werden.

8. System nach Anspruch 1, **dadurch gekennzeichnet, dass** die Steuereinheit (300) darüber hinaus Einrichtungen umfasst, um eine oder mehrere Kamera/s auf Grundlage empfangener Befehle, die selektive Positionsdaten umfassen, zu steuern und zu fokussieren.

9. Verfahren zum digital gerichteten Fokussieren und Lenken von abgetastetem Schall innerhalb eines Zielbereichs (400), um eine selektive Audioausgabe zu erzeugen, den Einsatz einer oder mehrerer geordneten Breitbandanordnung/en von Mikrofonen (100, 110), einer A/D-Signalumsetzungseinheit (200) und einer Steuereinheit (300) umfassend, wobei das Verfahren die folgenden, von der Steuereinheit (300) durchgeführten Schritte umfasst:
- Empfangen von digitalen Signalen von eingefangenem Schall von all den Mikrofonen, die das System umfasst;
- Empfangen von Befehlen, die selektive Positionsdaten in Form von Koordinaten umfassen, durch die Eingabeeinrichtung (350) in der Steuereinheit (300), wobei die Koordinaten in zwei oder drei Dimensionen vorliegen, um einen oder mehrere Fokussierungspunkt/e zu definieren;
- Auswählen von Signalen aus einer Auswahl von relevanten Mikrofonen in der/den Anordnung/en (100, 110) zur Weiterverarbeitung, wobei die Auswahl auf Grundlage von Spektralanalysen des empfangenen Signals erfolgt;
- Durchführen einer Signalverarbeitung an den Signalen aus der Auswahl von relevanten Mikrofonen, um den Klang den empfangenen Befehlen entsprechend zu fokussieren und zu lenken;
- Generieren eines selektiven Audioausgangs oder mehrerer selektiver Audioausgänge in Übereinstimmung mit den empfangenen Befehlen und der erfolgten Verarbeitung.

10. Verfahren nach Anspruch 9, **dadurch gekennzeichnet, dass** die empfangenen digitalen Daten in einem komprimierten Format vorliegen.

11. Verfahren nach Anspruch 9, **dadurch gekennzeichnet, dass** die empfangenen digitalen Signale des aus all den Mikrofonen in der/den Anordnung/en (100, 110) eingefangenen Schalls in einem Datenspeicher (320) gespeichert werden.

12. Verfahren nach Anspruch 9, **dadurch gekennzeichnet, dass** die Signalverarbeitungseinheit (300) die Signalverarbeitung in Echtzeit durchführt.

13. Verfahren nach Anspruch 9 und 11, **dadurch gekennzeichnet, dass** die Signalverarbeitungseinheit (300) die Signalverarbeitung in einem Nachverarbeitungsprozess durchführt, indem die gespeicherten Signal des eingefangenen Schalls verwendet werden.

14. Verfahren nach Anspruch 9, **dadurch gekennzeichnet, dass** die Signalverarbeitung eine räumliche und spektrale Strahlformung umfasst.

15. Verfahren nach Anspruch 9, **dadurch gekennzeichnet, dass** die Signalverarbeitung eine Multiplex-Abtastung und -Berechnung einer durch die Multiplexierung verursachten Signalverzögerung umfasst, um Korrekturen in der Software oder Hardware durchzuführen.

16. Verfahren nach Anspruch 9, **dadurch gekennzeichnet, dass** die Signalverarbeitung eine Berechnung einer Schalldruckverzögerung vom Schallziel zu der Anordnung von Mikrofonen zum Zweck der Durchführung einer Synchronisation des Signals mit einer vorbestimmten Zeitverzögerung umfasst.

17. Verfahren nach Anspruch 9, **dadurch gekennzeichnet, dass** die Signalverarbeitung eine dynamisch selektive Audioausgabe mit gleichzeitigem Zoomen und Schwenken des Schalls zu einer oder mehreren Stelle/n aktiviert und es auch ermöglicht, einem Kanal oder mehreren Kanälen, die räumliche Schallwiedergabesysteme enthalten, einen Audioton bereitzustellen.

18. Verfahren nach Anspruch 9, **dadurch gekennzeichnet, dass** die Signalverarbeitung eine Regelung der Abtastrate an ausgewählten Mikrofonelementen umfasst, um eine optimale Signalabtastung und - verarbeitung zu erzielen.

19. Verfahren nach Anspruch 9, **dadurch gekennzeichnet, dass** die Veränderung der Apertur der Mikrofonanordnung erfolgt, um einen bestimmten Frequenzgang zu erzielen und die Anzahl aktiver Elemente in der Mikrofonanordnung zu reduzieren.

20. Verfahren nach Anspruch 19, **dadurch gekennzeichnet, dass** die empfangenen selektiven Positionsdaten von einem System kommen, das ein oder mehrere Objekt/e nachverfolgt.

21. Verfahren nach Anspruch 14 und 19, **dadurch gekennzeichnet, dass** die Positionsdaten entscheiden, welche räumlichen Gewichtungsfunktionen verwendet werden sollen, um den Grad räumlicher Strahlformung mit einem Fokussieren und Lenken mit Verzögerung, und ein Summieren von Strahlformern und eine Veränderung von Nebenkeulenpegeln und der Strahlbreite einzustellen.

22. Verfahren nach Anspruch 21, **dadurch gekennzeichnet, dass** die räumliche Strahlformung durchgeführt wird, indem je nach der ausgewählten Strahlbreite der Hauptkeule eine Gewichtungsfunktion aus Cosin, Kaiser, Hamming, Hannig, Blackmann-Harris und länglich-kugelig (prolate spheroidal) ausgewählt wird.

23. Verfahren nach Anspruch 19, **dadurch gekennzeichnet, dass** die Koordinaten durch die Position und den/die Fokussierungspunkt/e einer oder mehrerer Kamera/s definiert werden, die ein Ereignis aufnimmt/aufnehmen, das an einer oder mehreren spezifischen Stelle/n im Zielbereich stattfindet.

24. Verfahren nach Anspruch 19, **dadurch gekennzeichnet, dass** die Koordinaten durch einen Benutzer definiert werden, der eine Benutzeroberfläche steuert, die eine oder mehrere Anzeige/n, die einen Überblick über den Zielbereich zeigt/zeigen, eine Tastatur, eine Audiomischeinheit und einen oder mehrere Joystick/s umfasst.

25. Verfahren nach Anspruch 19, **dadurch gekennzeichnet, dass** die Koordinaten verwendet werden, um eine oder mehrere Kamera/s zu steuern und zu fokussieren.

26. Verfahren nach Anspruch 17, **dadurch gekennzeichnet, dass** die dynamisch selektive Audioausgabe in einem räumlichen Schallwiedergabesystem in Kohärenz mit einer oder mehreren Kamera/s erfolgt.

## Revendications

1. Système pour la focalisation et l'orientation numériquement directives d'un son échantillonné dans une zone cible (400) pour produire une sortie audio sélective, comprenant un ou plusieurs ensembles large bande de microphones (100, 110), une unité de conversion A/N de signal (200), une unité de commande (300), dans lequel l'unité de commande (300) comprend :
■ des moyens de réception (310) pour recevoir des signaux numériques d'un son capturé de tous les microphones compris dans le système ;
■ des moyens d'entrée (350) pour recevoir des instructions comprenant des données de position sélective sous forme de coordonnées, où les coordonnées sont en deux ou trois dimensions pour définir un (ou des) point(s) de focalisation ;
■ des moyens de traitement de signal (330) pour choisir des signaux à partir d'une sélection de microphones pertinents dans le (ou les) ensemble(s) (100, 110) pour un traitement supplémentaire, où la sélection effectuée est basée sur des analyses spectrales du signal reçu ;
■ des moyens de traitement de signal (330) pour appliquer un traitement de signal aux signaux de la sélection de microphones pertinents pour focaliser et orienter le son conformément aux instructions reçues ;
■ des moyens de traitement de signal (330) pour générer une ou plusieurs sorties audio sélectives conformément aux instructions reçues et au traitement de signal effectué.

2. Système selon la revendication 1, **caractérisé en ce que** l'unité de commande (300) est située à un emplacement à distance et comprend des moyens (310) pour recevoir les signaux numériques du son capturé sur un réseau câblé ou sans fil.

3. Système selon la revendication 1, **caractérisé en ce que** les moyens d'entrée (350) dans l'unité de commande (300) comprennent des moyens pour recevoir des données de position sélectives sur un réseau câblé ou sans fil.

4. Système selon la revendication 1, **caractérisé en ce que** l'unité de commande (300) comprend en outre des moyens de mémorisation de données (320) pour mémoriser les signaux numériques reçus du son capturé.

5. Système selon la revendication 1, **caractérisé en ce que** l'unité de commande (300) effectue le traitement de signal sur plusieurs canaux sur la base d'une ou de plusieurs coordonnées d'entrée différentes.

6. Système selon la revendication 1, **caractérisé en ce que** l'unité de commande (300) comprend des moyens pour modifier l'ouverture du (ou des) ensemble(s) de microphones (100, 110) sur la base des composantes spectrales du son entrant.

7. Système selon la revendication 4, **caractérisé en ce que** l'unité de commande (300) comprend en outre des moyens pour convertir les signaux reçus en un format compressé avant qu'ils soient mémorisés dans les moyens de mémorisation (320).

8. Système selon la revendication 1, **caractérisé en ce que** l'unité de commande (300) comprend en outre des moyens pour commander et focaliser une ou plusieurs caméras sur la base d'instructions reçues comprenant des données de position sélective.

9. Procédé pour la focalisation et l'orientation numériquement directives d'un son échantillonné dans une zone cible (400) pour produire une sortie audio sélective, où le procédé comprend l'utilisation d'un ou de plusieurs ensembles large bande de microphones (100, 110), d'une unité de conversion A/N de signal (200), d'une unité de commande (300), dans lequel le procédé comprend les étapes suivantes effectuées par l'unité de commande (300) consistant à :
■ recevoir des signaux numériques d'un son capturé de tous les microphones compris dans le système ;
■ recevoir des instructions comprenant des données de position sélective sous forme de coordonnées, par l'intermédiaire de moyens d'entrée (350) dans l'unité de commande (300), où les coordonnées sont dans deux ou trois dimensions pour définir un (ou des) point(s) de focalisation ;
■ choisir des signaux d'une sélection de microphones pertinents dans le ou les ensembles (100, 110) pour un traitement supplémentaire, où la sélection effectuée est basée sur des analyses spectrales du signal reçu ;
■ appliquer un traitement de signal aux signaux de la sélection de microphones pertinents pour focaliser et orienter le son conformément aux instructions reçues ;
■ générer une ou plusieurs sorties audio sélectives conformément aux instructions reçues et au traitement effectué.

10. Procédé selon la revendication 9, **caractérisé en ce que** les signaux numériques reçus sont dans un format compressé.

11. Procédé selon la revendication 9, **caractérisé en ce que** les signaux numériques reçus du son capturé de tous les microphones dans le (ou les) ensemble(s) (100, 110) sont mémorisés dans une mémoire de données (320).

12. Procédé selon la revendication 9, **caractérisé en ce que** l'unité de traitement de signal (300) exécute le traitement de signal en temps réel.

13. Procédé selon les revendications 9 et 11, **caractérisé en ce que** l'unité de traitement de signal (300) exécute le traitement de signal dans un processus de traitement ultérieur en utilisant les signaux mémorisés du son capturé.

14. Procédé selon la revendication 9, **caractérisé en ce que** le traitement de signal comprend une mise en forme de faisceau spatiale et spectrale.

15. Procédé selon la revendication 9, **caractérisé en ce que** le traitement de signal comprend un échantillonnage multiplexé et le calcul d'un retard de signal, dû au multiplexage, pour effectuer des corrections de logiciel ou de matériel.

16. Procédé selon la revendication 9, **caractérisé en ce que** le traitement de signal comprend le calcul d'un retard de pression sonore de la cible sonore à l'ensemble de microphones en vue d'effectuer la synchronisation du signal avec un retard prédéfini.

17. Procédé selon la revendication 9, **caractérisé en ce que** le traitement de signal permet une sortie audio dynamiquement sélective avec un changement de focal et un déplacement latéral du son vers un ou plusieurs emplacements simultanément et permet également de fournir la sortie audio à un ou plusieurs canaux comprenant des systèmes d'ambiance.

18. Procédé selon la revendication 9, **caractérisé en ce que** le traitement de signal comprend la régulation de la fréquence d'échantillonnage sur des éléments de microphone sélectionnés pour obtenir un échantillonnage et un traitement de signal optimaux.

19. Procédé selon la revendication 9, **caractérisé en ce que** la modification de l'ouverture de l'ensemble de microphones est effectuée afin d'obtenir une réponse fréquentielle donnée et de réduire le nombre d'éléments actifs dans l'ensemble de microphones.

20. Procédé selon la revendication 19, **caractérisé en ce que** les données de position sélective proviennent d'un système suivant un ou plusieurs objets.

21. Procédé selon les revendications 14 et 19, **caractérisé en ce que** les données de position déterminent les fonctions de pondération spatiale à utiliser pour ajuster le degré de mise en forme de faisceau spatiale avec focalisation et orientation avec retard et sommation des dispositifs de mise en forme de faisceau, et modification du niveau des lobes secondaires et de la largeur de faisceau.

22. Procédé selon la revendication 21, **caractérisé en ce que** la mise en forme de faisceau spatiale est exécutée en choisissant une fonction de pondération parmi les fonctions cosinusoïdale, de Kaiser, de Hamming, de Hannig, de Blackmann-Haris et sphéroïdale allongée conformément à la largeur de faisceau choisie du lobe principal.

23. Procédé selon la revendication 19, **caractérisé en ce que** les coordonnées sont définies par la position et le (ou les) point (s) de mise au point d'une ou de plusieurs caméras filmant un événement qui a lieu à un (ou des) emplacement(s) spécifiques dans la zone cible.

24. Procédé selon la revendication 19, **caractérisé en ce que** les coordonnées sont définies par un utilisateur commandant une interface utilisateur comprenant un ou plusieurs afficheurs montrant une vue d'ensemble de la zone cible, un clavier, une unité de mixage audio et une ou plusieurs manettes de commande.

25. Procédé selon la revendication 19, **caractérisé en ce que** les coordonnées sont utilisées pour commander et mettre au point une ou plusieurs caméras.

26. Procédé selon la revendication 17, **caractérisé en ce que** la sortie audio dynamiquement sélective dans un système d'ambiance est cohérente avec une ou plusieurs caméras.
